# EUROPÄISCHE PATENTANMELDUNG

(11) **EP 1 801 003 A2**
(43) Veröffentlichungstag der Anmeldung: **27.06.2007**
(21) Anmeldenummer: 06022444.1
(22) Anmeldetag: 26.10.2006
(51) Int. Cl.: B62D 59/04

(54) **Rangierhilfseinrichtung für Fahrzeuganhänger**

(30) Priorität: 22.12.2005 DE 202005020065 U
(71) Anmelder: Knott GmbH, 83125 Eggstätt (DE)
(72) Erfinder: Strasser, Josef, 83257 Gstadt am Chiemsee (DE)
(74) Vertreter: Bauer, Friedrich

(57) **Zusammenfassung**

Eine Rangierhilfseinrichtung für Fahrzeuganhänger weist Elektromotoren auf, die auf die Fahrzeugräder (3) einwirken. Die Elektromotoren sind hierbei als Radnabenmotoren /-generatoren (8) ausgebildet, die zwischen einem Motorbetrieb und einem Generatorbetrieb umgeschaltet werden können.

## Beschreibung

Die Erfindung betrifft eine Rangierhilfseinrichtung für Fahrzeuganhänger gemäß dem Oberbegriff des Anspruches 1.

Es ist bekannt, bei Fahrzeuganhängern, wie beispielsweise Caravan- oder Bootsanhängern, batteriegespeiste Elektrohilfsmotoren vorzusehen, die im abgekoppelten Zustand des Fahrzeuganhängers auf die Fahrzeugräder einwirken können, um den Fahrzeuganhänger bewegen und rangieren zu können. Die hierzu erforderliche, am Fahrzeuganhänger vorgesehene Batterie muss bei Bedarf mittels eines Ladegeräts über ein externes Stromnetz aufgeladen werden.

Der Erfindung liegt die Aufgabe zugrunde, eine Rangierhilfseinrichtung der eingangs genannten Art zu schaffen, bei welcher sich das Nachladen der Batterie über ein externes Stromnetz erübrigt und die einen erweiterten Funktionsumfang aufweist.

Diese Aufgabe wird erfindungsgemäß durch eine Rangierhilfseinrichtung mit dem Merkmal des Anspruches 1 gelöst.

Vorteilhafte Ausführungsformen der Erfindung sind in den weiteren Ansprüchen beschrieben.

Bei der erfindungsgemäßen Rangierhilfseinrichtung sind die Elektromotoren als Radnabenmotoren/-generatoren ausgebildet. Weiterhin ist eine mit den Radnabenmotoren/-generatoren in Wirkverbindung stehende elektrische Steuerung vorgesehen, mit der die Radnabenmotoren/-generatoren zwischen einem Motorbetrieb, in dem sie auf die Fahrzeugräder eine Antriebskraft ausüben, und einem Generatorbetrieb umschaltbar sind, in dem sie elektrische Energie erzeugen.

Die erfindungsgemäßen Radnabenmotoren/-generatoren lassen sich somit einerseits als Hilfsmotoren zum Bewegen bzw. Rangieren des abgekoppelten Fahrzeuganhängers und andererseits als Energieerzeuger zur Energieversorgung von elektrischen Einrichtungen des Fahrzeuganhängers, insbesondere zum Aufladen der Batterie, während der Fahrt einsetzen. Ein separates Aufladen der Batterie über ein externes Stromnetz ist daher nicht mehr erforderlich.

Gemäß einer bevorzugten Ausführungsform ist die elektrische Steuerung mit einem Schlingersensor, beispielsweise einem Beschleunigungs- und/oder Gierratensensor, verbunden, wobei die Radnabenmotoren/-generatoren in Abhängigkeit der Signale des Schlingersensors von der Steuerung derart angesteuert werden, dass auf die Fahrzeugräder Bremskräfte ausgeübt werden, welche Schlingerbewegungen des Fahrzeugs entgegenwirken. Hierdurch kann die Bremsanlage des Anhängers unterstützt und dazu genutzt werden, um das Gespann durch Zugstreckung oder gegenphasiges Abbremsen einzelner Räder zu stabilisieren. Da das Bremsmoment proportional zum fließenden Strom ist, kann das zu erzeugende Bremsmoment genau eingeregelt werden. Eine derartige Abbremsung kann symmetrisch an beiden Seiten des Anhängers oder gegenphasig zur Schlingerbewegung erfolgen. Dadurch, dass zwischen der Modulation des erzeugten Stromes und dem damit erzeugten Bremsmoment kaum Phasenversatz besteht, eignet sich die erfindungsgemäße Rangierhilfseinrichtung besonders zum gegenphasigen Stabilisieren des Fahrzeuganhängers.

Eine platzsparende und einfache Anordnung der Radnabenmotoren/-generatoren ergibt sich, wenn diese an Bremstrommeln des Fahrzeuganhängers angebracht sind.

Die Erfindung wird nachfolgend anhand von Zeichnungen näher erläutert. Es zeigen:
- Figur 1 :: eine Seitenansicht eines Anhängerfahrgestells, bei dem die erfindungsgemäße Rangierhilfseinrichtung Verwendung finden kann,
- Figur 2 :: eine Draufsicht auf das Anhängerfahrgestell mit schematisch eingezeichneter Rangierhilfseinrichtung,
- Figur 3 :: eine Vorderansicht des Anhängerfahrgestells von Figur 1, und
- Figur 4 :: die Einzelheit IV von Figur 2 in vergrößerter Darstellung.

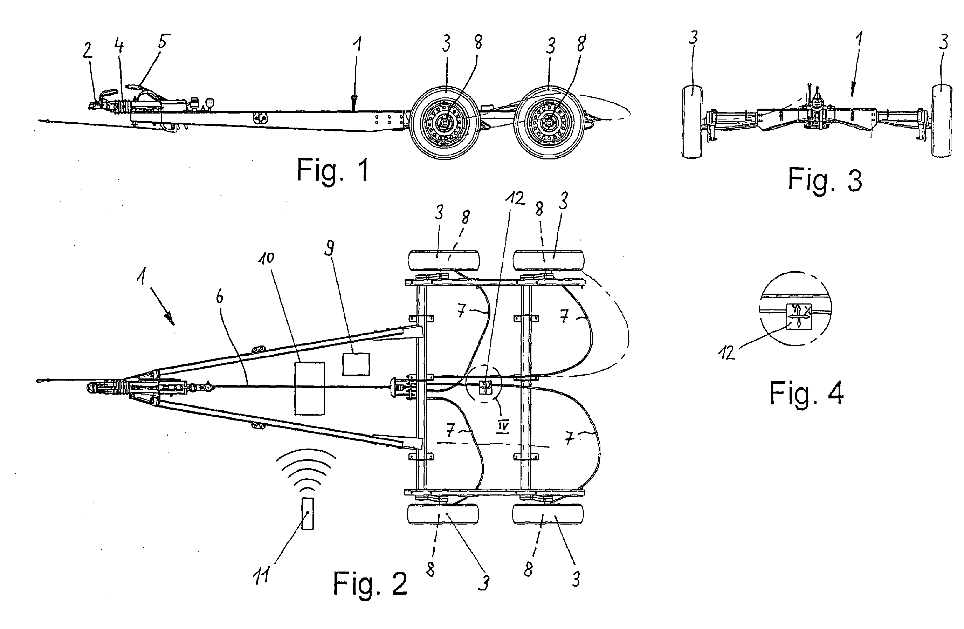

Aus den Figuren 1 bis 3 ist ein Anhängerfahrgestell 1 mit einer Anhängerkupplung 2 und Anhängerrädern 3 ersichtlich.

Im gezeigten Ausführungsbeispiel weist das Anhängerfahrgestell 1 zwei relativ nah beieinander liegende Achsen auf. Die Anzahl der Achsen kann jedoch variieren, so dass die Erfindung auch bei ein- oder mehrachsigen Fahrzeuganhängern eingesetzt werden kann.

Das Anhängerfahrgestell 1 weist im vorliegenden Fall ein hydraulisches Bremssystem mit einer Auflaufbremsanlage 4 und einer Handbremse 5 auf, die über Hydraulikleitungen 6, 7 mit nicht näher dargestellten Radbremsen in Wirkverbindung stehen. Alternativ können auch andere Bremssysteme, insbesondere mechanische Auflaufbremsanlagen, vorgesehen sein.

Die Anhängerräder 3 weisen im Bereich ihrer Radnaben nicht näher dargestellte Radnabenmotoren/-generatoren 8 auf, die beispielsweise außen an den Bremstrommeln angebracht sind.

Die Radnabenmotoren/-generatoren 8 stehen in nicht dargestellter Weise mit einer elektrischen Steuerung 9 in Verbindung und können über diese elektrische Steuerung 9 zwischen einem Motorbetrieb, in dem die Radnabenmotoren/-generatoren 8 eine Antriebskraft auf die Anhängerräder 3 ausüben, und einem Generatorbetrieb umgeschaltet werden, in dem sie elektrische Energie erzeugen, die insbesondere zum Aufladen einer am Fahrzeuganhänger vorgesehenen Batterie 10 oder zum Speisen anderer elektrischer Verbraucher des Fahrzeuganhängers verwendet werden kann.

Die elektrische Steuerung 9 ist derart ausgebildet, dass die links- und rechtsseitigen Radnabenmotoren/-generatoren 8 sowohl getrennt voneinander als auch gemeinsam zwischen dem Motorbetrieb und dem Generatorbetrieb umgeschaltet werden können. Soll der von einem Zugfahrzeug abgekoppelte Fahrzeuganhänger mit Hilfe der Radnabenmotoren/-generatoren 8 rangiert werden, kann der Fahrer über eine Funkfernbedienung 11 die elektrische Steuerung 9 und damit die Radnabenmotoren/-generatoren 8 derart ansteuern, dass entweder nur die linksseitigen, nur die rechtsseitigen oder mindestens zwei gegenüberliegende Anhängerräder 3 in Vorwärts- oder Rückwärtsrichtung angetrieben werden und damit ein selbständiges Rangieren des Fahrzeuganhängers in allen Richtungen bzw. ein Vorwärts- oder Rückwärtsfahren ermöglichen.

Der Fahrzeuganhänger weist ferner einen Schlingersensor 12 auf, bei dem des sich beispielsweise um einen Beschleunigungs- oder Gierratensensor handeln kann, der seitliche Schlingerbewegungen und/oder vertikale Kippbewegungen des Fahrzeuganhängers erfassen kann. Der Schlingersensor 12 ist ebenfalls in einer nicht näher dargestellten Weise mit der elektrischen Steuerung 9 verbunden. Werden vom Schlingersensor 12 Schlingerbewegungen des Fahrzeuganhängers detektiert, gibt er entsprechende Signale an die elektrische Steuerung 9 aus, die dann die elektrischen Ströme in den einzelnen, im Generatorbetrieb laufenden Radnabenmotoren/-generatoren 8 individuell derart regelt, dass links- und/oder rechtsseitig Bremsmomente erzeugt werden, welche den Schlingerbewegungen entgegenwirken und den Fahrzeuganhänger stabilisieren. Die Abbremsung kann somit symmetrisch an beiden Seiten des Fahrzeuganhängers oder gegenphasig zur Schlingerbewegung erfolgen.

## Patentansprüche

1. Rangierhilfseinrichtung für Fahrzeuganhänger, mit mit den Fahrzeugrädern (3) in Wirkverbindung stehenden Elektromotoren, die von einer Batterie (10) gespeist werden, **dadurch gekennzeichnet, dass** die Elektromotoren als Radnabenmotoren/-generatoren (8) ausgebildet sind, und dass eine mit den Radnabenmotoren/-generatoren (8) in Wirkverbindung stehende elektrische Steuerung (9) vorgesehen ist, mit der die Radnabenmotoren/-generatoren (8) zwischen einem Motorbetrieb, in dem sie auf die Anhängerräder (3) eine Antriebskraft ausüben, und einem Generatorbetrieb umschaltbar sind, in dem sie elektrische Energie erzeugen.

2. Rangierhilfseinrichtung nach Anspruch 1, **dadurch gekennzeichnet, dass** die elektrische Steuerung (9) mit einem Schlingersensor (12) des Fahrzeuganhängers verbunden ist und die Radnabenmotoren/-generatoren (8) in Abhängigkeit der Signale des Schlingersensors (12) derart ansteuert, dass auf die Fahrzeugräder (3) Bremskräfte ausgeübt werden, welche Schlingerbewegungen des Fahrzeuganhängers entgegenwirken.

3. Rangierhilfseinrichtung nach Anspruch 1, **dadurch gekennzeichnet, dass** die Radnabenmotoren/-generatoren (8) an Bremstrommeln des Fahrzeuganhängers angebracht sind.
